# EUROPEAN PATENT APPLICATION

(11) **EP 0 779 724 A1**
(43) Date of publication of application: **18.06.1997**
(21) Application number: 96850182.5
(22) Date of filing: 30.10.1996
(51) Int. Cl.: H04L 12/46, H04L 12/18

(54) **Device at LAN emulation standard**

(30) Priority: 11.12.1995 SE 9504418
(71) Applicant: TELIA AB, 123 86 Farsta (SE)
(72) Inventor: Kavak, Nail, 143 32 Vaarby (SE)
(74) Representative: Karlsson, Berne

(57) **Abstract**

The present invention relates to LAN networks for control whether requested communications are allowed or not. In the system are arranged control devices, containing lists over allowed connection cases. At the establising of a communication, the control device checks whether a requested communication is allowed or not. Verification of the users is made by that the control device via separate communication path receives a verification of at least one of the users. The communication is after that allowed depending on the contents in said list. For instance is two-way information interchange or one-way information interchange allowed.

## Description

### TECHNICAL FIELD

The present invention relates to local networks, LAN, for transmission of information between users. Especially is related to LANs which are interconnected via communication networks, and emulated LANs, ELAN which are allowed to be connected to each other for information interchange.

### PRIOR ART

The LANE-service allows interconnection and cooperation with traditional ATM-technology. Existing LAN-technology differs from ATM in two important respects: The address structure in LAN is flat and is distinctly identified with 6 octets, whereas ATM has a hierarchical addressing consisting of 20 octets. Any connection whatsoever between the addressings does not exist. Multicast and broadcast services, on which several LAN-services are based, are lacking definition in ATM. The LANE-service is especially contructed to provide these qualities over an ATM-network, whereas qualities of traditional LANs are prereserved. The definition of address is necessary to associate LAN-addresses to ATM-addresses. Multicast/broadcasting is utilized to reach multiple destinations via one single packet. Both services are provided by service devices which are a part of the ATM-network. To participate in the LANE-service, the client shall initially have a subscription in a LANE configuration server (LECS). The connection procedure can result in success or failure. If the connection procedure fails, the client can not transmit address decision inquiry or transmission of multicast/broadcast packets. In case of successful connection phase, the client receives the ATM-address in LES to which they have established a control channel to register their MAC (Media Access Control) and corresponding ATM-addresses. The data transmission proceeds in the following way: If the client wants to transmit packets for which open ATM-channels are lacking, an address decision request is transmitted to the server. When and if the client receives an answer from the server, the client has established an ATM-connection over which data can be transmitted. The client can save the address decision to minimize future request. The connection procedure is consequently utilized to prevent not authorized users to be connected to the LANE-service.

On the other hand, a client can be configured to bypass the LANE configuration server (LECS) and the LANE address converting server (LES) and establish data connection to any other client, provided that the ATM-address is known. If the destination client learns (the transmitter's MAC-address, VCC) by reading incoming data, as many bridges and file servers are expected to do, an invading client can efficiently be connected to an emulated LAN without going via any server or connection procedure according to the above. This will not function for multicast data, but for unicast data.

This patent application suggests ways to increase the security in ELAN. Any client can bypass the configuration server (LECS) and address the decision server (LES) and get data connection to just any client. If for instance the learning bridge learns the addresses from incoming traffic, an invading client can connect himself/herself to an emulated LAN without going via any server. This learning bridge can however learn to protect itself and ELAN with a flush protocol. When a client accepts a new direct data VCC, this can transmit an equalization inquiry to a new VCC and keep or throw received data until the equalization answer has been returned via the protocol path. This verifies that a suspect LANE-client has been connected to the same LES as the paranoid client at a cost which is bigger than for normal utilization of the equlization protocol. When the membership once has been verified, VCC can be used safely without further loss of packets. This solution does not require any changes in existing LANE service specifications.

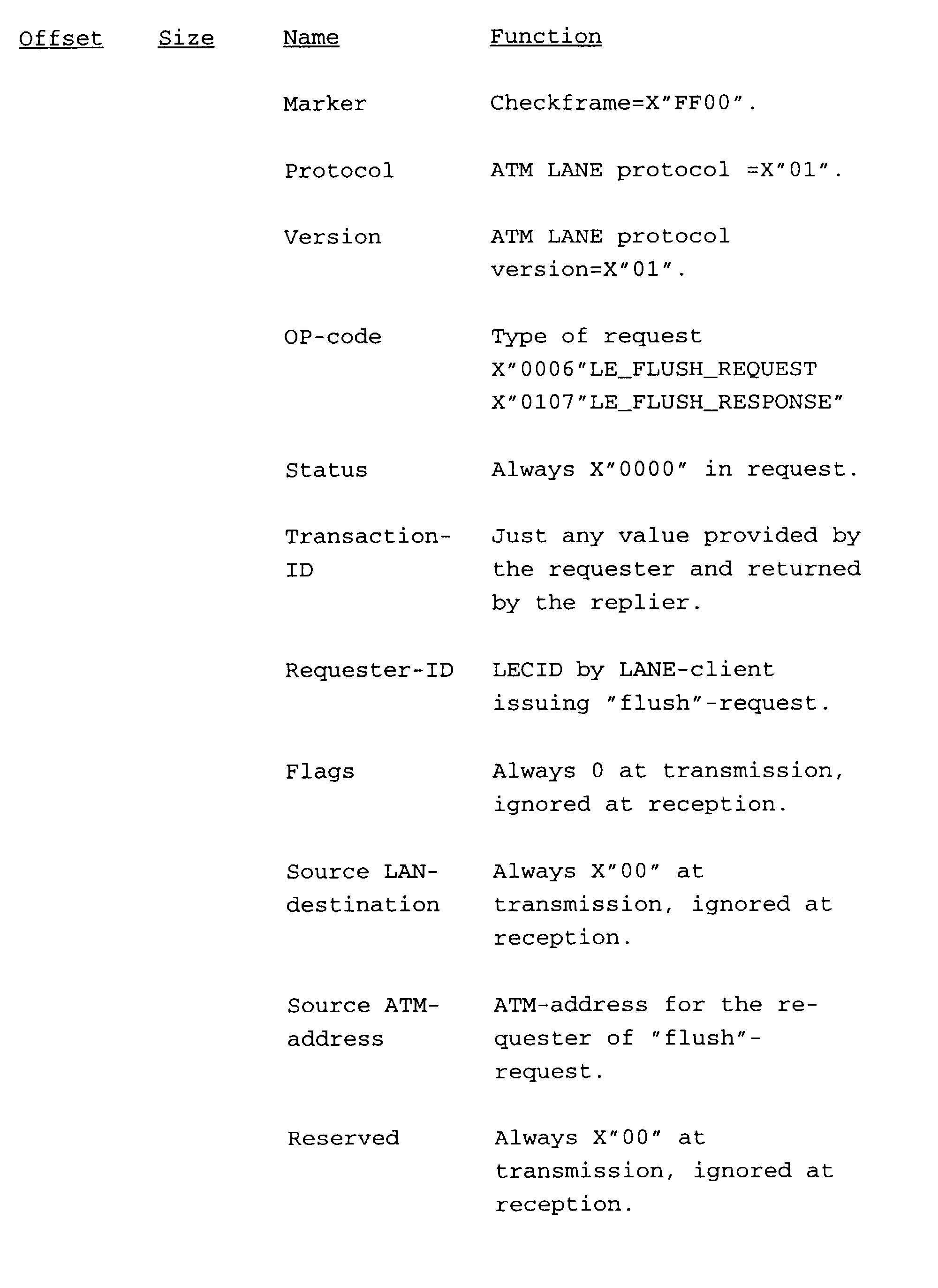

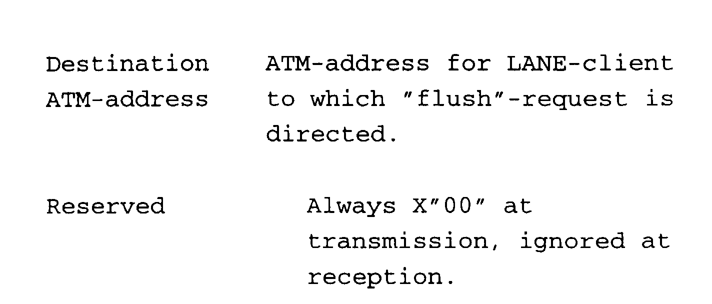

### DESCRIPTION OF THE INVENTION

### TECHNICAL PROBLEM

The emulation standard of LANs of today are lacking mechanisms to prevent unauthorized users to connect themselves to the service. In the protocol there are slots which can be abused by unauthorized users. Mechanisms are further lacking to construct allowed/prohibited communication cases between certain terminals in one and the same communication group. Such a flexibility is important to prevent access to files and the like for unauthorized users within the same group.

It is consequently desirable to find an algorithm by means of which unauthorized users can be detected by the user. There should be a filter function which allows/prevents communication within the same group.

Unauthorized ones further shall not have possibility to manipulate addresses, and at that by the system be conceived as authorized. A protocol should further exist which makes possible that the above presented problems are solved in distributed environments. The function is of outmost importance at offering of LAN emulation service which is possible to shell in large public networks. The security aspects are of especially big importance when LAN emulation service shall be utilized in connections where the security is of greatest importance, for instance banks, hospitals etc. The present invention is intended to solve these problems.

### THE SOLUTION

The present invention relates to LAN emulation standard where communication is established between a first and a second user. The users consist of individuals or groups of users. The users are further allocated unique addresses. At the establishing of communication, control devices to which the second user is connected to the network, checks whether communication is allowed or not. Connection is only made if addresses and/or identities have been verified as allowed.

The control device checks at a request for connection the address of the calling party via a separate control route. Information which is transmitted during the verification phase can either be stored or immediately thrown. Information which has been stored is forwarded after the verification has been finished. If no verification is obtained, the stored information is thrown. Occurring communication cases between the users are further arranged in a list. Control devices utilize the information in the list to decide whether the communication is allowed or not. The list comprises information regarding permitted and/or not permitted communication cases. By that the control device reads the addresses of the users, there is a possibility obtained to check the addresses against the list. Users which at that are found to be authorized to communication are connected; others are refused communication. The control device further refuses communication with immediate effect if an indicated address is not permitted. In the network structure is further allowed that control functions are arranged which prevent that the information flow goes in loops, or that address tracing is prevented. The list over not permitted connection cases further indicates which traffic directions that are allowed respective not allowed.

### ADVANTAGES

The invention shows a number of advantages where the address and/or identity of a calling party can be checked. Further, connection is performed only if the address and/or the identity has been verified. Communication between users is effectively prevented. By that via a separate communication path check a transmitter, a unique possibility is obtained to check whether an indicated address is correct or not. In the network there is further possibility to store information from the transmitter until verification has been received. If negative answer is obtained, the information which has been stored is thrown without the receiver having studied it. The system further allows that all information which is received is thrown during the control phase. The lost information can after verification be returned to the receiver. The security in LAN-applications will in this way increase considerably.

In the system included control devices' list of approved communication cases further allows that the parties in a communication can be efficiently checked. With said list one consequently can decide between which users communication is allowed, and if one- or two-way information interchange is allowed. By the possibility of the control device to check the addresses of the first and second user, is further secured that the identifications of the users are unequivocal.

The list is alternatively allowed to include connection cases which are not allowed, which immediately results in a refusal for connection between the users. In the list can further all connection cases be included, at which the list immediately indicates whether the connection case is allowed or not. By not allowing loops in the information flow, not permitted paths, which may result in not permitted information transmission, are further avoided. In LANs is further allowed direct indication of addresses betweeen which information shall flow. By arranging blockings to trace addresses at establishing of communications such connnection attempts are also avoided.

### DESCRIPTION OF FIGURES

Fig.1 shows a distributed ELAN-architecture with showing of addresses.
LES = LANE address resolution Server
BUS = Brodacast and Unknown Server
CC = Call Control

Fig.2 shows initiation, registration and regain in ELAN.

Fig.3 shows ATM-ATM-cooperation.
A = ATM Network B = LE Service
C = ATM station D = Users of MAC service
E = LE Layer F = AAL5, ATM, PHY

Fig.4 shows an ATM-LAN-cooperation.
A = ATM Network B = LE Service
C = ATM station H = LAN
AEB = ATM/Ethernet Bridge
E = LE Layer F = AAL5, ATM, PHY
G = MAC Layer of Legacy LANs

Fig.5 shows a LAN-LAN connection.
A = ATM Network B = LE Service
I = Bridge H = LAN

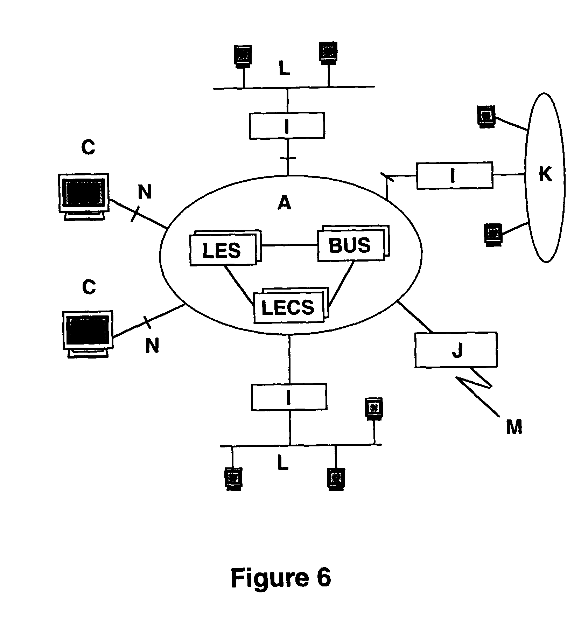

Fig.6 shows an example of configuration of an emulated LAN.
A = ATM Network LES = LE-server (LES)
LECS = Configuration server (LECS)
BUS = Broadcast & Unknown server (BUS)
I = Bridge J = Router/Bridge
K = Token Ring L = Ethernet/802.3
M = To other emulated LANs
N = LUNI

### DETAILED DESCRIPTION

In the following the invention is described on the basis of the figures and the terms therein.

Abbreviations:
- APPN:: Advanced Peer-to-Peer Networking
- ATM:: Asynchronous Transfer Mode
- BUS:: Broadcast and Unknown Service
- CC:: Call Control
- ELAN:: Emulated LAN
- LAN:: Local Area Network
- LANE:: LAN Emulation
- LAT:: Local Area Transport
- LEC:: LAN Emulation Client
- CID:: Client Identifier
- LECID:: LAN Emulation Client ID
- LECS:: LANE Configuration Server
- LES:: LANE address resolution Server
- MAC:: Media Access Control
- MAN:: Metropolitan Area Networks
- SMDS:: Switched Multi-Megabit Data Service
- UNI:: User Network Interface
- VCC:: Virtual circuit channel

The showing of addresses is constructed to secure that only authorized allowed combinations of users are allowed to communicate within a certain emulated LAN. Also in an ELAN there are cases where members from one department in an organization do not want that members from other departments shall study the contents of the data on a connected LAN. For instance does the staff department not want that just any person within the company shall study the biographical data of the employees.

Showing of addresses is used only to allow communication between specified addresses. If an ATM-address is shown via an ELAN membership list and matches the list, the connection is accepted (however, connection can still be refused for other reasons). The address showing operation is defined by address lists called ELAN. There are two kinds of address showing: Source address showing and destination address showing. Source address showing is a process to decide whether to accept or not accept a connection based on its source address. Destination address showing is a process to decide about connection or not, based on the destination address.

A showing always consists of a set of allowed addresses, appointing a number of addresses with which communication is allowed, or a set of not allowed addresses, constituting a list of addresses which are not allowed. If an ATM-address corresponds to the list over approved addresses, the connection will be allowed. If there is no correspondence, the connection is refused. The opposite will occur if the ATM-address is compared with a list of not allowed addresses. The introduction of address comparison can be implemented in just any place in the service providing network. It is however normal that the destination address control is performed on the place where source address control is performed. The table below contains information regarding certain client combinations between which communication is allowed or not allowed in a given ELAN. The address control must be carefully configured, so that faulty configurations are not allowed. The configurations within an ELAN are made manually.

| ELAN address | Source address | Destination address | Allow/refuse |
|---|---|---|---|
| LAN.1 | ATM.1 | ATM.7 | Allow |
| LAN.1 | ATM.3 | ATM.2 | Allow |
| LAN.1 | ATM.7 | ATM.1 | Allow |
| LAN.1 | ATM.2 | ATM.3 | Refuse |
| LAN.2 | ATM.2 | ATM.3 | Allow |
| LAN.2 | ATM.7 | ATM.1 | Allow |

In centralized architectures the lists over members are stored centrally in a LANE-server. The call control unit easily checks a calling party in a call establishing inquiry against the client subscriber list. Connection is accepted or refused with regard to the result of the comparison in the list. The client consequently will not get any connection if the combination is not allowed. It is presupposed that the CC unit has the same registration, connection table, as LES. To make the address comparison work possible, the CC-unit keeps an additional information regarding allowed scenarios which is maintained by the system administration.

Source address validation is a service access control quality. The address of the calling party is verified at the start to verify if he/she belongs to the address list for ELAN or not. Join request with not permitted source address regarding ELAN is refused. The motivation for source address validation is to prevent fraud where a transmitter intends to cheat the receiver that the connection is established by another source and allows the address control to work correctly.

If the LANE service components are implemented on a distributed path, the procedure is more complicated beacuse this requires synchronization of the membership in the whole ELAN. Before join request is confirmed, LES need to be assured of the unequivocalness of the ATM-addresses and/or the LAN-destinations. This can be accomplished by receiving answers from all other LES instances via accessible protocols. Successful, registered ATM-addresses and LAN-destinations can be distributed by ELAN by utilization of standard route protocol technologies. LES can have mesh or three structures. If LES are interconnected via a mesh structure, delivery is made to each server directly, and no server component need to transmit messages to a single group to secure delivery and prevent loops in a full mesh topology of servers. In acyclical graphes, messages always must be transmitted to secure delivery, but since loops do not exist in the topology, the prevention of message looping can be completed by blocking of tracing of the path. Blocking can be applied to every node, either by no "forwarding" of message on connection from which it was received, or by filtered messages which have already been received.

At the beginning, a control channel is established to all CC-units in ELAN. The channel is utilized to distribute or access the list of members for ELAN.

The initiation stage refers to parameters which are configured at "the outset of time". The initiation is completed after the Join- and Initial-registration processes have been finished and the connections to Broadcast and Unknown Server (BUS) have been performed. At this point of time LANE Service Client (LEC) becomes operable. At the starting stage there are parameters (such as addresses, ELAN names, max. frame size, etc) set, which are known to LES and LEC about themselves before the participation in the configuration phase and the Join phase function.

In LEC's connection phase, the LANE client appoints a configuration direct VCC to LECS.

During the configuration phase the LANE-client receives LES's ATM-address, and other configuration parameters, if any. Configuration control parameters are of two kinds: Configuration_request and Configuration_response. The configuration phase prepares a LANE Client for the Join phase by providing necessary operation parameters for ELAN, which the client later unites. The LANE configuration protocol allows allocation of individual LANE clients to different ELANs and provides information regarding current LAN's operator parameters. Based on own policies, configuration databases and information provided by clients, a LECS allocates some client who asks for configuration information to a special LANE service unit by giving it the LANE-server's address and other parameters.

In the ATM LANE Initation-Join phase, LANE-client establishes its control connections to LES. The join-procedure can give two results: Success or failure. When the join phase is successfully completed, the client has been allocated a unique client identifier (LECID), which knows the maximum frame size and the LAN-type of the emulated LAN, and has established Control VCC with LES. There are two join-frames which are interchanged between a client and a LANE-service. The format can be found from the following table.

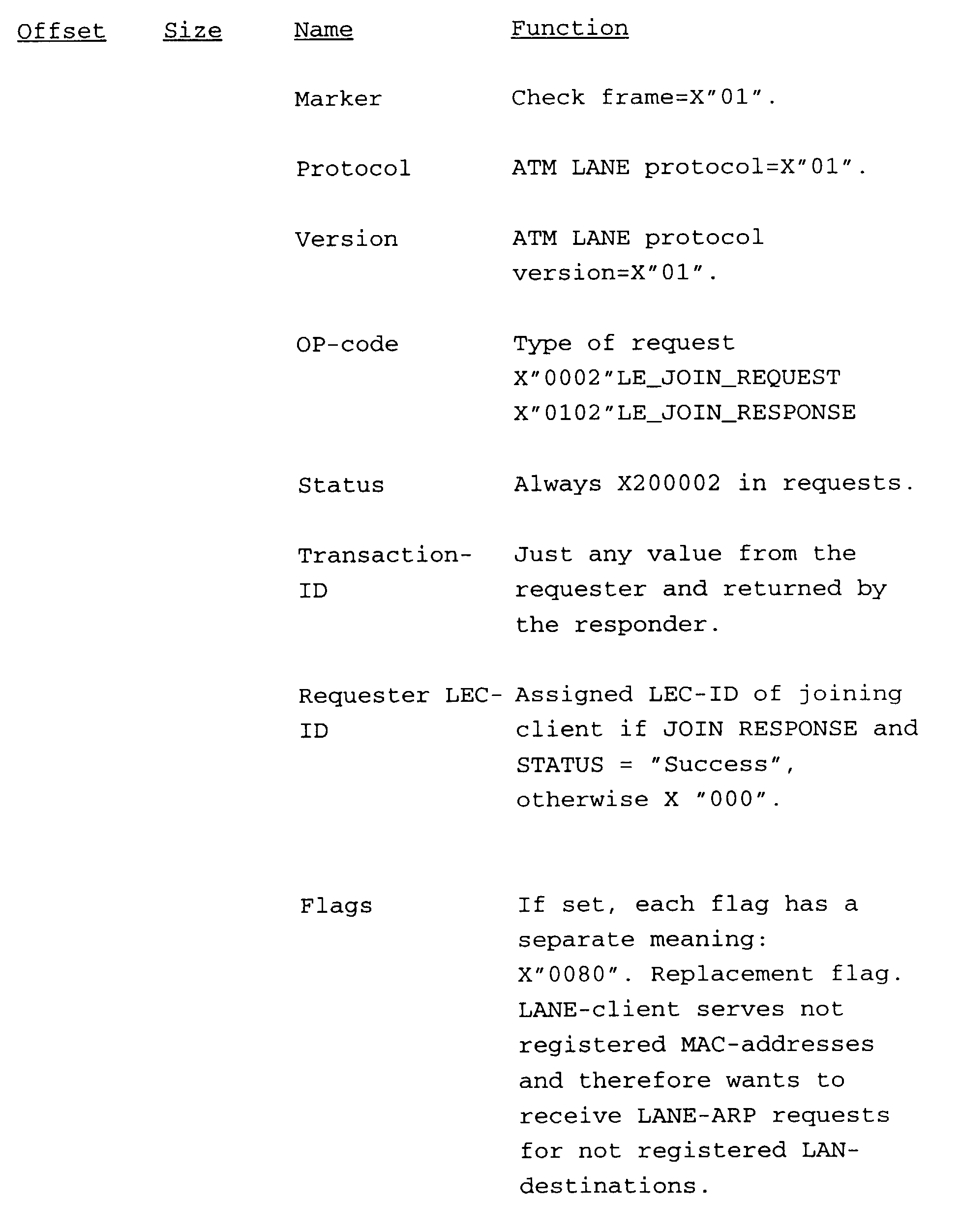

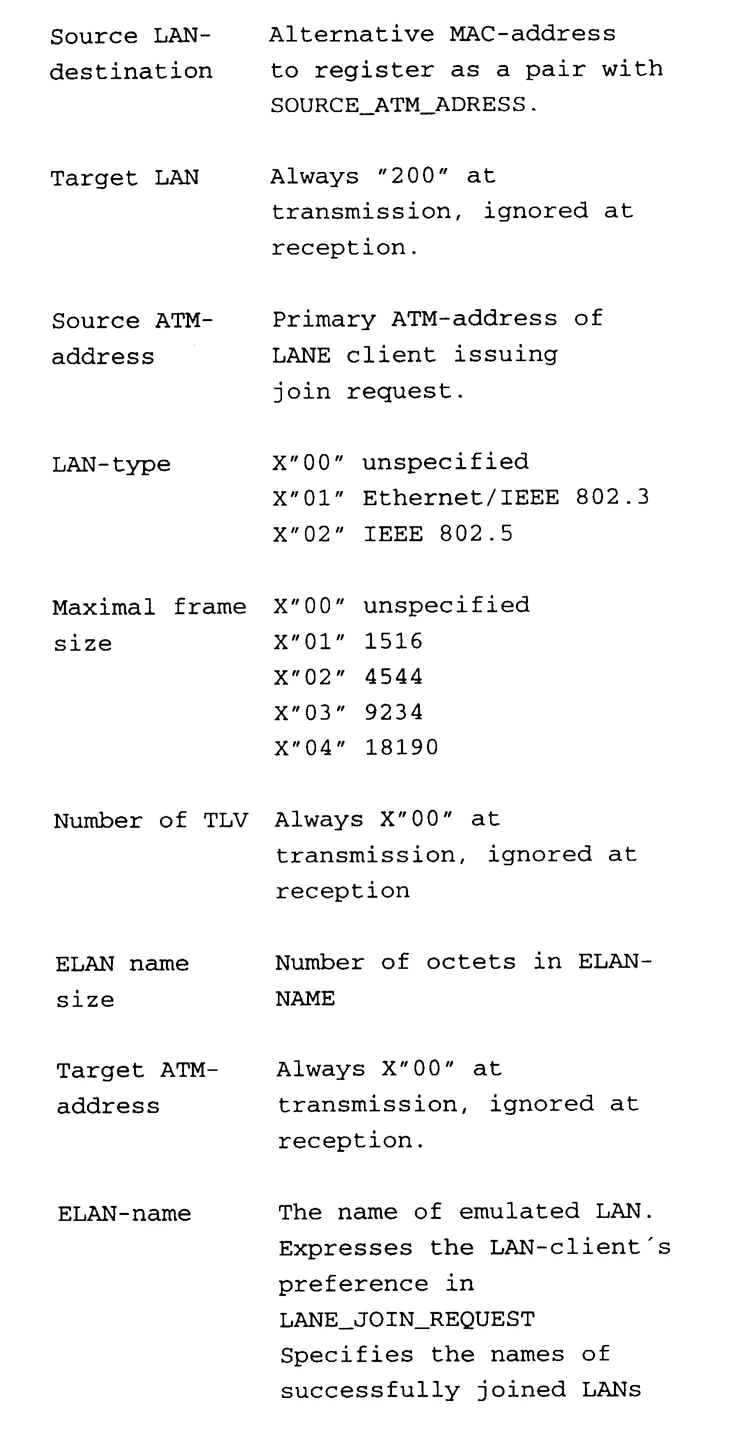

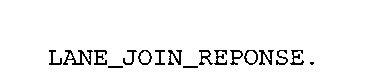

The address registration function is a mechanism by which the client provides address information to LES. An intelligent LES can reply to address decision requests if LANE-clients register their LAN-destinations together with their LES. The LAN-destinations can also be unregistered if the condition of the client is changed. A client must either register all LAN-destinations for which it is responsible, or be joined as one to take his/her place.

After joining, the LANE-client can register a MAC-address number and/or root descriptions. This is an addition to the simple MAC-address which can be registered as part of the joining phase. The beginning of the registration allows the client to verify the unequivocalness in its local address before the initiation is finished and the client becomes operable. There are four registration formats:
LE_REGISTER_REQUEST, LE_REGISTER_RESPONSE,
LE_UNREGISTER_REQUEST,and LE_UNREGISTER_RESPONSE.

The details of the registration format is shown below.

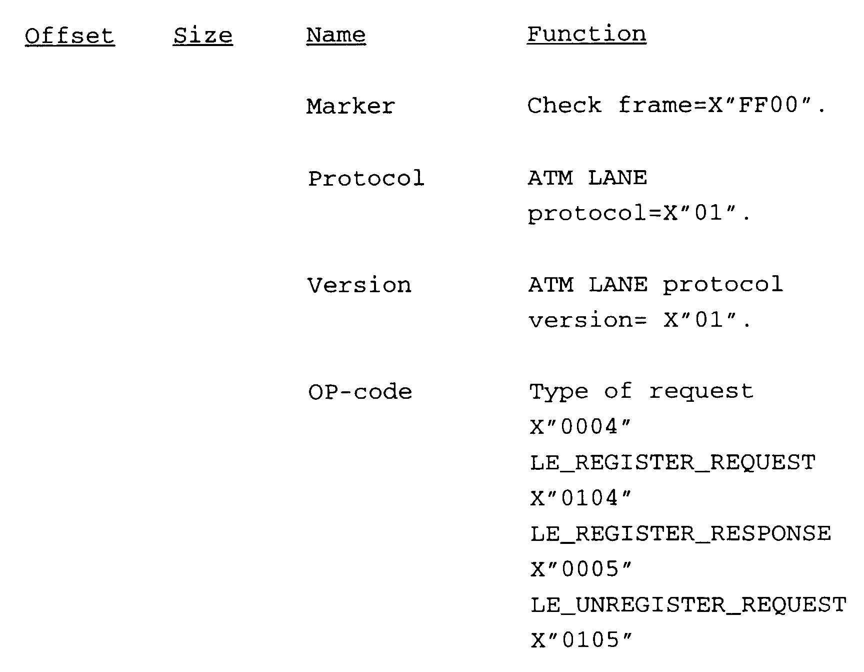

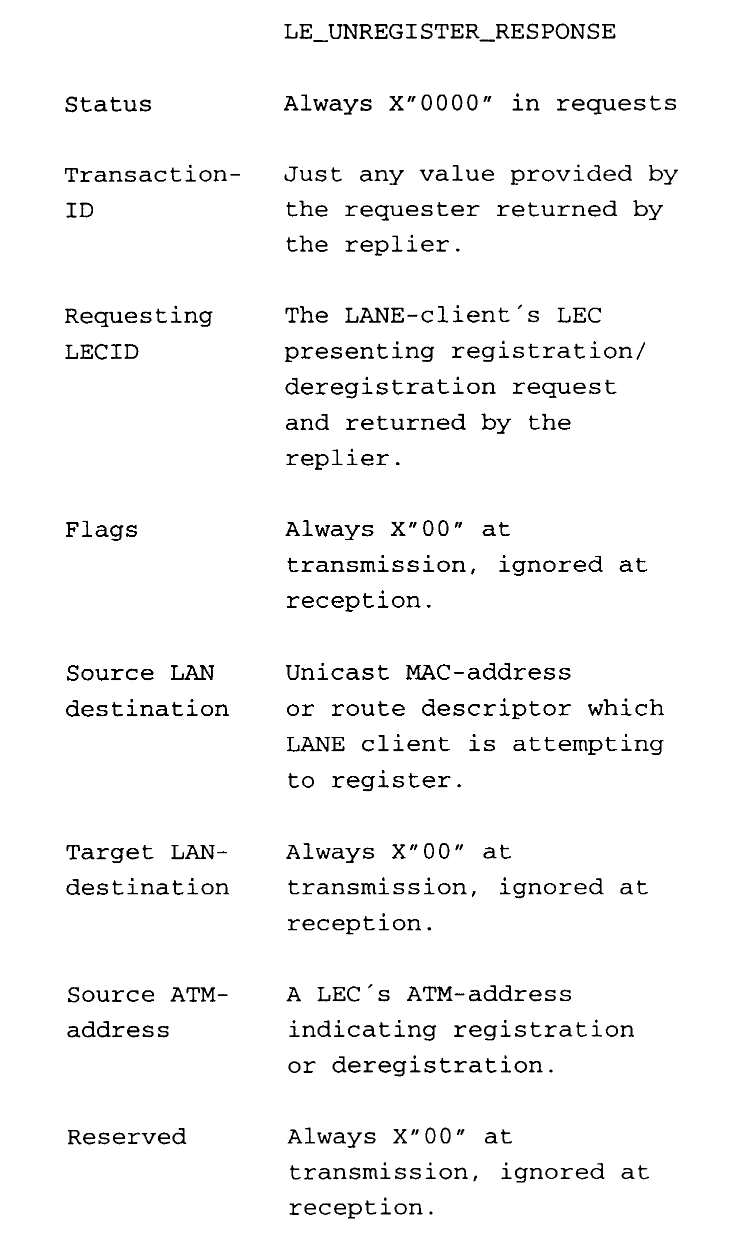

As has been described above, mutiple LES can be mesh-, semi- mesh-, star- or ringbased loopfree topologies for distribution of membership information. A local LES transmits information to all its members, and is constructed on the basis of the client's registration to other LES. The local membership list which is constructed during the Join/Registration-phase to all neighbouring LES shall also spread updatings between them. This can be necessary because a client can be deregistered, which is spread to other LES. Before the input is taken away (i.e. in case of timeout), a client must transmit an ARP-request to LES to remind the memory function.

Essentially LANE is a way to make ATM's connection functions invisible in order to legalize LAN. It consequently makes it possible to save all advantages which are connected with ATM without demanding extended and expensive changes in hard-respective software in the end equipments.

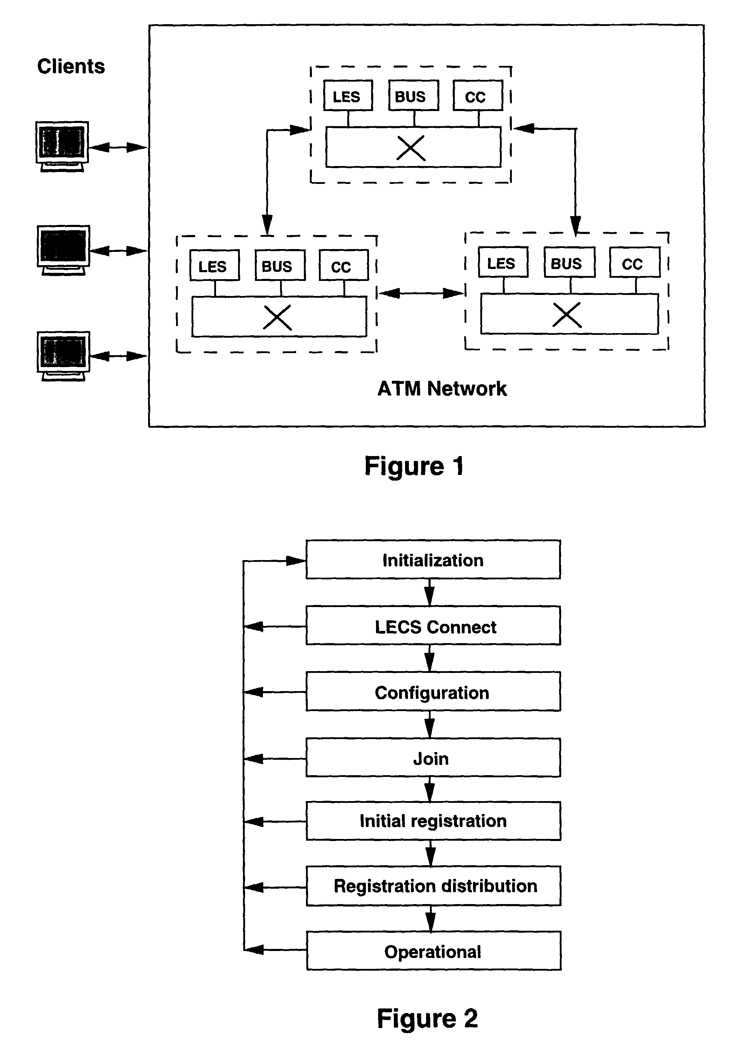

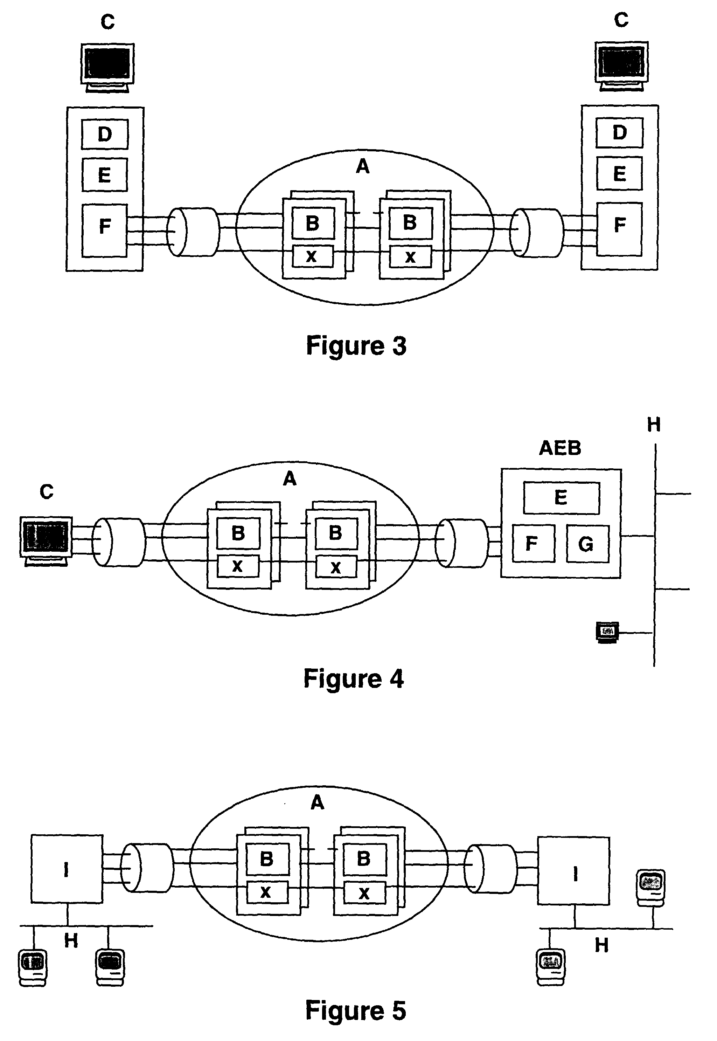

The LANE-service is exclusively constructed to support three configuration scenarios: ATM-ATM cooperation (Fig. 1), ATM-LAN cooperation (Fig. 2), and LAN-LAN cooperation (Fig. 3). Connection of existing LAN-applications over ATM's backbone, to other user systems, which both are ATM-adapted (servers, High end Systems), and those which are legal LANs, are possible with bridging methods. The intention is to make possible for ATM to be utilized equally with a backbone technology for existing LAN-technologies. This allows the users to take advantage of the qualities which ATM provides as backbone technology, at the same time as they are offered a way to take advantage of ATM's natural advantages in the future.

LANE also allows applications in LAN to get access to ATM-connected servers, work stations and other network equipments. Consequently LANE provides the protocol packets of the upper layers over ATM-connections without any modifications to legalize the software. At the same time is made possible conversion of LAN-packets to ATM-cells (and vice versa) without generation of too much overhead in ATM-connected equipments. It is accordingly not only the administration of common protocols such as IPX, APPN, DECnet and TCP/IP, but also end-to-end communication utilizing unroutable protocols such as Netbios, LAT (Local Area Transport) and SNA. It should be noticed that also when ATM-adapters have replaced all LAN-adapters in a network, legal protocols and applications can continue to function unchanged. Again the goal is to protect companies and protect made investments.

In an emulated LAN, clients can be grouped independent of their localizations (virtual LANs). A client is allowed to be included in a multiple of emulated LANs. Clients can remain members of the same emulated LAN, even if they move from one phyical address to another in the ATM network. It is important that generally transmitted frames stay within the limits for an emulated LAN, exept in the cases where LANs communicate via bridges or routers.

In ATM-stations LANE-services are provided by LANE-layers. The LANE-layer protects protocol stacks of higher layers from characteristics in ATM-networks and gives them the illusion of being connected to a traditional LAN. The LANE-service provides functions regarding initiation, registration, address decision and transmission of unicast or multicast frames. The architecture in the LANE-service is based on a client server model (request-reply). The components in an emulated LAN include ATM work stations and ATM/LAN bridges (i.e. clients, see Fig.4). The components in an emulated LAN-service include a LAN-server (LES), a LANE configuration server (LECS) and a broadcast and unknown server (BUS). The LANE-architecture, however, does not implicate any special implementation. In fact just any of the LANE-service components can be implemented distributed (for reliability or execution reasons), or centralised.

All components can also be concentrated in one single physical unit (for instance for economical reasons). To make possible such implementation flexibility, a number of virtual channels for communication between LANE-clients and LANE-components are defined. Normally, clients utilize control channels (for instance configuration-direct VCC, control-direct VCC, etc) for transmission/reception of control messages to/from LANE-components and data channels (data-direct VCC, multicast-transmit VCC) for transmission (reception of only user data). An emulated LAN is dimensioned for 20 LES/BUS-pairs and roughly 2000 LANE-clients. The restrictions in an emulated LAN depends in fact to a great extent on the number of replacement clients, since they contribute to the generally transmitted traffic (broadcast) and not on the number of servers. A large number of LES and BUS can however contribute to increased traffic and further delay depending on ARP.

LES provides facilities to register and determine MAC-addresses to ATM-addresses. LECS is utilized to localize LES and get configuration information for each ATM-segment. BUS is essentially utilized to forward multicast/broadcast frames, but also for delivery of unicast frames intended for LAN-stations for which addresses not yet can be reserved. Most LAN-applications are based on sequential delivery of frames. In emulated LANs the clients are allowed to transmit information via BUS before a direct path has been established for the data, and when a direct connection has been established, the client can have two paths, one via BUS and one direct path. Switching between these paths introduces the possibility to deliver frames without order.

The problem with preservice of transmission of unicast frames over emulated LANs has been solved by the equlization protocol. The algorithm which is applied for the equlization protocol is rather simple. At switching between two paths the transmitter client transmits an equlization message the old path and keeps up the frames for a given LAN-destination until the receiver client has confirmed that the old path has been disconnected and the new one can be taken into use. At the reception of the confirmation, the transmitter client transmits all frames which has been stopped the new path.

There are alternative methods to administrate frames outside delivery. One is that the reciever client only accepts frames from the direct path and not from BUS, which results in loss of starting frames. Another way is that the transmitter client waits for a time for decision of address, before BUS is utilized. In this way the number of outside existing frames can be minimized at the cost of a delay. The fact is that the equlization protocol introduces a certain delay due to the frame buffering while waiting for confirmation from the receiver client.

## Claims

1. Device at LAN emulation standard, where communication is arranged to be established between a first user and a second user, which first respective second user are allowed to be single users and/or groups of users, and each user/group of users is arranged to be allocated unique addresses, **characterized** in that, at the establishing of the communication, devices are arranged to control the address and/or identity of the first user, and that communication is arranged to be allowed only if the address and/or identity has been verified.

2. Device according to patent claim 1, **characterized** in that the device, via an arranged check path, is arranged to control the address of the first user.

3. Device according to patent claim 1 or 2, **characterized** in that the device is arranged to store received information until the address verification has been received, or that the device is arranged to reject received information until address verification has been received.

4. Device according any of the previous patent claims, **characterized** in that the in the device stored information is forwarded to the second user when the address verification and/or identity has been verified.

5. Device according to patent claim 1, **characterized** in that a list is arranged to be established over occurring communication cases between said first and second user, that control devices on the basis of the information in the list are arranged to allow or prevent the communication.

6. Device according to patent claim 1 or 5, **characterized** in that the list is arranged to indicate allowed communication cases between the first and the second user, and/or that the list is arranged to indicate not allowed communication cases between the first and the second user.

7. Device according to patent claim 1, 5 or 6, **characterized** in that the control device is arranged to read the addresses of the first respective second user.

8. Device according to patent claim 1, 5, 6 or 7, **characterized** in that the control device is arranged to allow the communication only if the communication case is included in the list over allowed communication cases.

9. Device according to any of the patent claims 1, 5-8, **characterized** in that a requested communication between said first and second user is arranged to be refused if the communication is not included in the list over allowed communication cases.

10. Device according to any of the patent claims 1, 5, 6 or 8, **characterized** in that the control device is arranged to refuse the communication between the first and the second user in the case that the communications case is included in the list over not permitted communication cases.

11. Device according to any of the patent claims 1, 5, 6 or 10, **characterized** in that the control device is arranged to allow the communication when the communication case is not included in the list over not permitted communication cases.

12. Device according to the patent claims 1, 5 or 6, **characterized** in that the control device is arranged to check the requested communication between the first and the second users against the list, and that the communication is allowed or refused depending on whether the information in the list indicates that the commmunication is allowed or not.

13. Device according any of the previous patent claims, **characterized** in that the control device, at initiation of the communication, is arranged to check whether communication interchange is allowed between the users.

14. Device according any of the previous patent claims, **characterized** in that the information is only allowed to flow directly in a network structure, and that loops are not allowed.

15. Device according any of the previous patent claims, **characterized** in that tracing of addresses in a communication is arranged not to be possible to perform.

16. Device according any of the previous patent claims, **characterized** in that the first user is arranged to be transmitter and the second user is arranged to be receiver.

17. Device according any of the previous patent claims, **characterized** in that the list over allowed communication cases is arranged to identify allowed communication directions between the users, for instance that one-way information from the first user to the second user, or vice versa, or two-way information is allowed.
